Europäisches Patentamt

(19) European Patent Office

Office européen des brevets

(11) Veröffentlichungsnummer: **0 003 309**
**B1**

(12) **EUROPÄISCHE PATENTSCHRIFT**

(45) Veröffentlichungstag der Patentschrift:
**16.09.81**

(51) Int. Cl.³: **F 16 J 1/24, F 02 F 3/00**

(21) Anmeldenummer: **79100115.9**

(22) Anmeldetag: **16.01.79**

(54) **Hubkolbentrieb für Brennkraftmaschinen.**

(30) Priorität: **25.01.78 AT 519/78**

(43) Veröffentlichungstag der Anmeldung:
**08.08.79 Patentblatt 79/16**

(45) Bekanntmachung des Hinweises auf die Patenterteilung:
**16.09.81 Patentblatt 81/37**

(84) Benannte Vertragsstaaten:
**DE FR GB IT NL SE**

(56) Entgegenhaltungen:
**CH-A-200 762**
**DE-B-1 576 418**
**DE-C-1 301 657**
**FR-A-496 457**
**FR-E-21 614**
**US-A-2 369 500**

(73) Patentinhaber: **Steyr-Daimler-Puch Aktiengesellschaft,
Kärntnerring 7, Wien (AT)**

(72) Erfinder: **Dolenc, Anton, Rudolf Kassnergasse 5,
A-1190 Wien (AT)**
Erfinder: **Visek, Tomas, Eisteichstrasse 9/12, A-1110 Wien
(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

Hubkolbentrieb für Brennkraftmaschinen

Die Erfindung bezieht sich auf einen Hubkolbentrieb für Brennkraftmaschinen, bei dem der Kolbenringe tragende Kolben mit der Pleuelstange um seine Längsachse drehbar verbunden ist, wobei zwischen dem eine Kugelpfanne bildenden Kolben und der mit einem Kugelkopf in die Kugelpfanne eingreifenden Pleuelstange eine die Pleuelstangen-Schwenkbewegung in eine Drehung des Kolbens umwandelnde Kupplung vorgesehen ist, die einen im Kugelkopf gelagerten, mit der Pleuelstangenachse einen von 90° abweichenden Winkel einschliessenden, quer zur Pleuelstangen-Schwenkebene liegenden Kupplungszapfen aufweist.

Ein derartiger Hubkolbentrieb ist bereits bekannt (DE-C 13 01 657). Dabei ist für den Eingriff der abgeflachten Enden des Kupplungszapfens ein parallel zur Kolbenachse geschlitztes Kupplungselement vorgesehen, das mit dem Kolben nach Art eines Freilaufes oder Gesperres nur in einer Drehrichtung kraftschlüssig verbindbar ist, während sich der Kolben im Bereich der einen oder anderen Totpunktlage befindet. Durch diese freilauf- oder gesperreartige Einrichtung soll eine fortlaufende Drehung des Kolbens erreicht werden, obwohl das Kupplungselement bei der Schwenkbewegung der Pleuelstange nur um die Kolbenlängsachse hin und her gedreht wird. Nachteilig ist dabei der sich durch die Konstruktionsteile der freilauf- bzw. gesperreartigen Einrichtung ergebende, mit einer Gewichtsvermehrung verbundene, erhöhte technische Aufwand, wobei das vermehrte Gewicht höhere Massenkräfte mit sich bringt, die zu einer grösseren Normalkraft gegen die Zylindergleitbahn mit entsprechender Kolbenbelastung und Lagerbeanspruchung sowie verstärkter Geräuschbildung führen. Dazu kommt noch, dass die fortschreitende, also nur in einer Richtung erfolgende Kolbendrehung zu einer axial symmetrischen Kolbenausbildung zwingt, was beispielsweise die unsymmetrische Anordnung einer Brennraummulde bzw. einer Aussparung für die Ventilteller im Kolbenboden unmöglich macht, obwohl eine solche Anordnung für Hochleistungsmotoren günstig wäre. Schliesslich ergibt sich eine verhältnismässig weite Öffnung der Kugelpfanne für die Pleuelstange, weil diese Öffnung die Schwenkbewegung der Pleuelstange in jeder Drehstellung des Kolbens gewährleisten muss. Die dadurch beträchtlich verringerte Oberfläche der Kugelpfanne kann unzulässig hohe Flächenbelastungen ergeben.

Es ist auch schon ein Hubkolbentrieb bekanntgeworden (FR-C 496 457), bei dem die mit einem Kugelkopf in eine Kugelpfanne des Kolbens eingreifende Pleuelstange mit Abstand vom Kugelkopf einen quer zur Pleuelstangen-Schwenkebene gerichteten Zapfen trägt, der drehbar und verschiebbar in ein Kupplungsstück eingreift, das in einer seitlich am Kolbenmantel angeordneten Führung lagert. Dadurch wird die Pleuelstangen-Schwenkbewegung in eine hin und her gehende Kolbendrehbewegung umgewandelt, wobei sich aber grosse Verdrehwege ergeben, die nur bei langsam laufenden, schlitzgesteuerten Maschinen zulässig sind, bei hohen Drehzahlen aber grosse Massenkräfte und damit auch Beanspruchungen der einzelnen Konstruktionsteile unter den vorhandenen Drücken hervorrufen. Ausserdem ergibt sich durch den von der Pleuelstange abstehenden Zapfen, das Kupplungsstück und die Führung ebenfalls ein erhöhter technischer Aufwand mit vermehrtem Gewicht, wobei in ungünstiger Weise eine exzentrische Massenverteilung vorhanden ist.

Somit liegt der Erfindung die Aufgabe zugrunde, diese Mängel zu beseitigen und einen Hubkolbentrieb der eingangs geschilderten Art zu schaffen, der eine Verringerung des technischen Aufwandes und des Kolbengewichtes gewährleistet.

Die Erfindung löst die gestellte Aufgabe dadurch, dass der drehbar im Kugelkopf gelagerte Kupplungszapfen direkt in einem kolbenfesten, für den Zapfeneingriff zur Kolbenachse geschlitzten Kupplungselement gleitet, das selbst den pleuelstangenseitigen Teil der Kugelpfanne mit einer Öffnung für die Pleuelstange bildet und vorzugsweise zweiteilig mit etwa in der Pleuelstangen-Schwenkebene liegenden Trennflächen ausgeführt ist.

Da der drehbar im Kugelkopf gelagerte Kupplungszapfen direkt im kolbenfesten Kupplungselement gleitet, erübrigen sich alle Konstruktionsteile für eine freilauf- bzw. gesperreartige Verbindung von Kupplungselement und Kolben. Diese mit einer entsprechenden Gewichtsverminderung verbundene Vereinfachung hat allerdings zur Folge, dass der Kolben keine fortlaufende, sondern eine hin und her gehende Drehbewegung vollführt. Es wurde erkannt, dass es zur Erzielung einer gleichmässigen und verringerten Abnützung nicht notwendig ist, dem Kolben als solchen eine fortlaufende Drehbewegung zu erteilen, dass es vielmehr genügt, wenn die Kolbenringe eine nur in einer Richtung erfolgende Drehbewegung ausführen. Durch die unterschiedlichen Gas- und Massenkräfte im Bereich des unteren und oberen Kolbentotpunktes werden nämlich die Kolbenringe mit verschiedener Kraft an die Flanken bzw. Seitenwände der Kolbenringnuten gepresst, so dass im Bereich des oberen Kolbentotpunktes eine Drehungsmitnahme der Kolbenringe durch Reibungsschluss an der betreffenden Nutflanke erfolgt, wogegen im Bereich des unteren Kolbentotpunktes die Reibung der Kolbenringe an der Zylinderwandung überwiegt und eine Rückdrehung der Kolbenringe verhindert. Da sich ferner die Hin- und Herdrehung des Kolbens nur über wenige Winkelgrade erstreckt, kann dem Kolben ohne weiteres auch eine in bezug auf seine Achse unsymmetrische Bauform verliehen werden, sofern beispielsweise nur die Aussparungen im Kolbenboden für die Ventilteller die diesen Winkelgraden entsprechende Erweiterung erhalten. Da der eine Teil der Kupplungspfanne zugleich als Kupplungselement dient und somit eine Doppelfunktion erfüllt, wird eine einfach und leicht zu montierende Konstruktion erreicht, wobei es die Zweiteiligkeit des Kupplungselementes erlaubt, dieses um den Kugelkopf zu legen, ohne die Pleuelstange durch das Kupplungselement stecken zu müssen, was eine Abnehmbarkeit des kurbelseitigen Auges der Pleuelstange zur Voraussetzung hätte.

Die Öffnung des Kupplungselementes für die Pleuelstange ist als sich in deren Schwenkrichtung erstreckendes Langloch ausgebildet, was möglich ist, da der Kolben nur eine verhältnismässig geringe hin und her drehende, aber keine fortschreitende Bewegung ausführt. Die Verengung des sonst erforderlichen Rundloches auf ein Langloch bringt aber bereits eine Vergrösserung der Tragfläche der Kugelpfanne und damit eine Verringerung der spezifischen Flächenbeanspruchung mit sich. Eine weitere Vergrösserung der Lagerfläche der Kugelpfanne lässt sich erzielen, wenn das Langloch etwa nierenförmig gestaltet ist, was einer genauen Anpassung an die beiden Bewegungen von Pleuelstange und Kolben entspricht.

Die beiden Hälften des Kupplungselementes könnten mit dem übrigen Kolben zusammengeschweisst werden. Es ist aber auch möglich, die beiden Hälften an ihren freien Stirnseiten durch einen Zentrierring zusammenzuhalten und gemeinsam mit diesem durch zur Kolbenachse parallele Schrauben im Kolben zu befestigen, was eine einfach montierbare und auch zerlegbare Konstruktion ergibt, wobei durch den Zentrierring jenes Spiel überbrückt wird, das sich zwangsläufig zwischen den beiden Hälften des Kupplungselementes und dem Kolben ergibt.

In der Zeichnung ist der Erfindungsgegenstand in einem Ausführungsbeispiel dargestellt, und zwar zeigen:

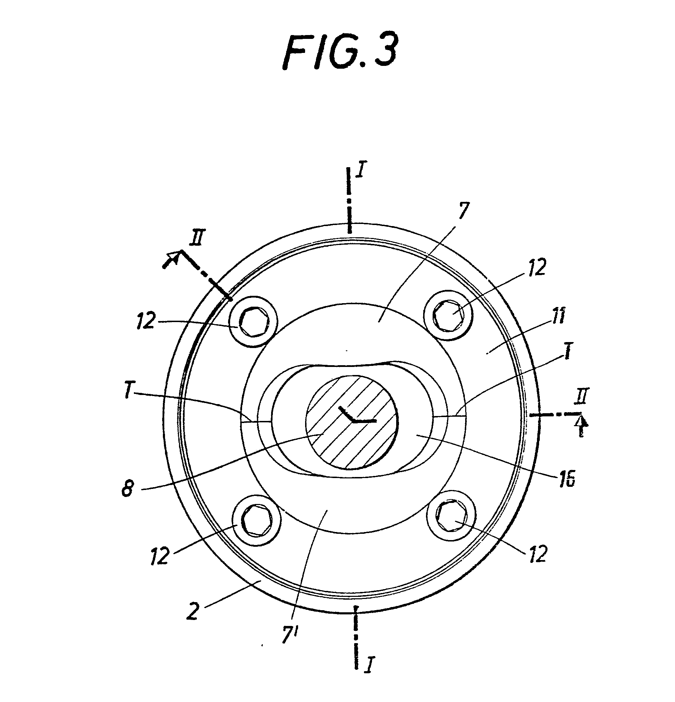

Fig. 1 die erfindungswesentlichen Teile eines Hubkolbentriebes im Schnitt durch die Kolbenachse nach der Linie I–I der Fig. 3,

Fig. 2 einen ebenfalls durch die Kolbenachse gelegten Schnitt nach der Linie II–II der Fig. 3 und

Fig. 3 einen waagrechten Schnitt nach der Linie III–III der Fig. 2, wobei der Zylinder weggelassen ist.

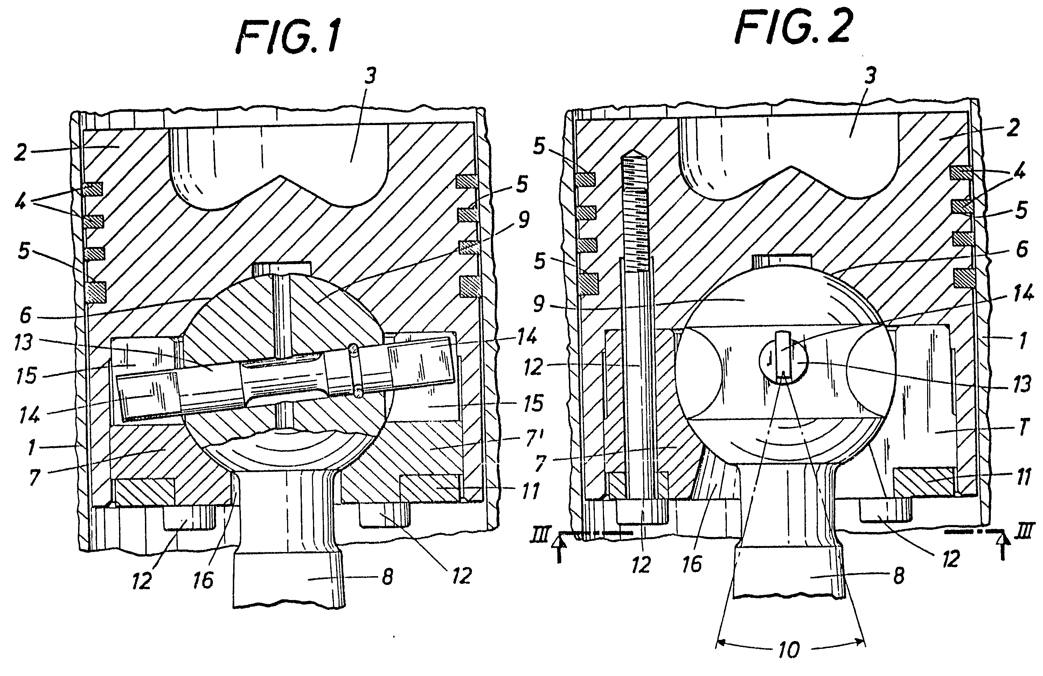

Im Zylinder 1 einer Brennkraftmaschine ist ein Hubkolben 2 mit einer Brennraummulde 3 gleitbar geführt, wobei der Kolben 2 Kolbenringe 4 trägt, die in den Kolbennuten 5 ein gewisses Spiel haben, das aber zu gering ist, um dargestellt zu werden. Der Kolben 2 bildet den oberen Teil 6 einer Kugelpfanne, deren unterer Teil in einem Kupplungselement 7, 7' ausgespart ist, das für sich aus zwei Teilen besteht. Die Pleuelstange 8 endet in einem Kugelkopf 9, der in diese Kugelpfanne eingreift und bei der Drehung der nicht dargestellten Kurbelwelle eine in Fig. 2 strichpunktiert angedeutete Schwenkbewegung gemäss dem Pfeil 10 ausführt. Die beiden Hälften 7, 7' des Kupplungselementes sind an ihrer freien Stirnseite durch einen Zentrierring 11 zusammengehalten und durch zur Kolbenachse parallele Schrauben 12 mit dem Kolben 2 verspannt, wobei die Trennflächen T etwa in der Schwenkebene der Pleuelstange 8 liegen.

Im Kugelkopf 9 ist ein Kupplungszapfen 13 drehbar gelagert, der mit seinen abgeflachten Enden 14 in zur Kolbenachse parallele Schlitze 15 des Kupplungselementes 7, 7' eingreift. Dieser Kupplungszapfen 13 steht quer zur Pleuelstangen-Schwenkebene und schliesst mit der Pleuelstangenachse einen von 90° abweichenden Winkel ein. Durch diese Anordnung des Kupplungszapfens wird bei der Pleuelstangen-Schwenkbewegung eine Hin- und Herdrehung des Kupplungselementes 7, 7' und des mit diesem drehfest verbundenen Kolbens 2 herbeigeführt. Das mit dem Kolben 2 drehfest verbundene Kupplungselement 7, 7' weist für den Durchtritt der Pleuelstange 8 ein etwa nierenförmig gestaltetes Langloch 16 auf, das sich mit seiner Längsrichtung im wesentlichen in der Schwenkrichtung der Pleuelstange 8 erstreckt.

**Patentansprüche**

1. Hubkolbentrieb für Brennkraftmaschinen, bei dem der Kolbenringe (4) tragende Kolben (2) mit der Pleuelstange (8) um seine Längsachse drehbar verbunden ist, wobei zwischen dem eine Kugelpfanne bildenden Kolben (2) und der mit einem Kugelkopf (9) in die Kugelpfanne eingreifenden Pleuelstange (8) eine die Pleuelstangen-Schwenkbewegung in eine Drehung des Kolbens (2) umwandelnde Kupplung vorgesehen ist, die einen im Kugelkopf (9) gelagerten, mit der Pleuelstangenachse einen von 90° abweichenden Winkel einschliessenden, quer zur Pleuelstangen-Schwenkebene liegenden Kupplungszapfen (13) aufweist, dadurch gekennzeichnet, dass der drehbar im Kugelkopf (9) gelagerte Kupplungszapfen (13) direkt in einem kolbenfesten, für den Zapfeneingriff parallel zur Kolbenachse geschlitzten Kupplungselement (7, 7') gleitet, das selbst den pleuelstangenseitigen Teil der Kugelpfanne mit einer Öffnung (16) für die Pleuelstange (8) bildet und vorzugsweise zweiteilig mit etwa in der Pleuelstangen-Schwenkebene liegenden Trennflächen (T) ausgeführt ist.

2. Hubkolbentrieb nach Anspruch 1, dadurch gekennzeichnet, dass die Öffnung des Kupplungselementes (7, 7') für die Pleuelstange (8) als sich in deren Schwenkrichtung erstreckendes Langloch (16) ausgebildet ist.

3. Hubkolbentrieb nach den Ansprüchen 1 und 2, dadurch gekennzeichnet, dass das Langloch (16) etwa nierenförmig gestaltet ist.

4. Hubkolbentrieb nach Anspruch 3, dadurch gekennzeichnet, dass die beiden Hälften (7, 7') des Kupplungselementes an ihrer freien Stirnseite durch einen Zentrierring (11) zusammengehalten und gemeinsam mit diesem durch zur Kolbenachse parallele Schrauben (12) im Kolben (2) befestigt sind.

## Claims

1. A reciprocating-piston drive for internal-combustion engines, wherein the piston (2), which carries piston rings (4), is connected to the connecting-rod (8) by means permitting the piston to rotate on its longitudinal axis, the piston (2) constitutes a spherical socket, the connecting-rod (8) has a ball head (9) received by said spherical socket, a coupling is provided between the spherical socket and the ball head and serves to transform the pivotal movement of the connecting-rod to a rotation of the piston (2) and comprises a coupling pin (13), which is movably mounted in the ball head (9) and includes with the axis of the connecting-rod an angle differing from 90° and extends transversely to the plane in which the connecting-rod is pivotally movable, characterized in that the coupling pin (13), which is rotatably mounted in the ball head (9), slides directly in a coupling element (7, 7'), which is fixed to the piston and for receiving the pin is slotted parallel to the piston axis and constitutes that portion of the spherical socket that is adjacent to the connecting-rod and has an opening (16) for the connecting-rod (8) and said coupling element preferably consists of two parts having interfaces (T) lying approximately in the plane in which the connecting-rod is pivotally movable.

2. A reciprocating-piston drive according to claim 1, characterized in that the opening formed in the coupling element (7, 7') for receiving the connecting-rod (8) consists of a slot (16), which extends in the direction of the pivotal movement of the connecting-rod.

3. A reciprocating-piston drive according to claims 1 and 2, characterized in that the slot (16) is approximately cardioid-shaped.

4. A reciprocating-piston drive according to claim 3, characterized in that the two halves (7, 7') of the coupling element are held together at their free end face by a centring ring (11) and jointly with the latter are secured in the piston (2) by screws (12), which are parallel to the axis of the piston.

## Revendications

1. Mécanisme à piston alternatif pour moteurs à combustion interne dans lequel le piston (12) portant des segments (4) est relié à la bielle (8) avec possibilité de rotation autour de son axe longitudinal et entre le piston (2) formant une cuvette de rotule et la bielle s'engageant dans la cuvette de rotule par une tête de rotule (9) est prévu un accouplement transformant un mouvement de pivotement de la bielle en une rotation du piston (2) et présentant un tourillon d'accouplement (13) monté dans la tête de rotule (9), placé transversalement au plan de pivotement de la bielle et faisant avec l'axe de la bielle un angle différent de 90°, mécanisme caractérisé par le fait que le tourillon d'accouplement (13) monté de manière à pouvoir tourner dans la tête de rotule (9), glisse directement dans un élément d'accouplement (7, 7') solidaire du piston, fend parallèlement à l'axe du piston pour l'engagement du tourillon, formant lui-même la partie de la cuvette de rotule située du côté de la bielle, avec une ouverture (16) pour la bielle (8) et de préférence exécuté en deux parties dont les surfaces de séparation (T) sont situées à peu près dans le plan de pivotement de la bielle.

2. Mécanisme selon la revendication 1, caractérisé par le fait que l'ouverture prévue dans l'élément d'accouplement (7, 7') pour la bielle (8) est sous la forme d'un trou allongé (16) situé dans la direction de pivotement de celle-ci.

3. Mécanisme selon l'une des revendications 1 et 2, caractérisé par le fait que le trou allongé (16) est à peu près réniforme.

4. Mécanisme selon la revendication 3, caractérisé par le fait que les deux moitiés (7, 7') de l'élément d'accouplement sont maintenues assemblées à leur côté frontal libre par une bague de centrage (11) et qu'elles sont fixées dans le piston (2) en même temps que celle-ci par des vis (12) parallèles à l'axe du piston.

*FIG.1*

*FIG.2*

# FIG.3